# EUROPÄISCHE PATENTSCHRIFT

(11) **EP 3 655 685 B1**
(45) Veröffentlichungstag und Bekanntmachung des Hinweises auf die Patenterteilung: **15.02.2023**
(21) Anmeldenummer: 18746642.0
(22) Anmeldetag: 18.07.2018
(51) Int. Cl.: H02K 7/06, H02K 7/116, F16K 31/50, F16K 31/52, F16K 31/04, F16K 37/00

(54) **STELLGERÄT MIT SICHERHEITSSTELLFUNKTION**
ACTUATING UNIT HAVING A SAFETY ACTUATING FUNCTION
DISPOSITIF DE RÉGLAGE À FONCTION DE RÉGLAGE DE SÉCURITÉ

(30) Priorität: 18.07.2017 DE 102017116108
(43) Veröffentlichungstag der Anmeldung: 27.05.2020
(73) Patentinhaber: Samson Aktiengesellschaft, 60314 Frankfurt am Main (DE)
(72) Erfinder: KRAUSE, Sebastian, 63486 Bruchköbel (DE)
(74) Vertreter: Schmid, Nils T.F.
(86) Internationale Anmeldenummer: PCT/EP2018/069499
(87) Internationale Veröffentlichungsnummer: WO 2019/016262

(56) Entgegenhaltungen:
- EP-A1- 1 258 969
- EP-A1- 2 177 801
- EP-A1- 3 112 771
- EP-A2- 0 828 067
- EP-A2- 0 851 163
- EP-A2- 1 143 129
- EP-A2- 2 110 592
- DE-A1- 3 606 722
- DE-A1-102004 014 986
- DE-A1-102015 108 155
- DE-A1-102016 113 117
- US-A- 5 828 193

## Beschreibung

Die Erfindung betrifft ein Stellgerät mit Sicherheitsstellfunktion zum Betätigen eines Stellglieds, wie ein Ventilglied, zum Einstellen einer Prozessfluidströmung einer prozesstechnischen Anlage. Stellgeräte mit Sicherheitsstellfunktion sind dazu in der Lage, in einer Notsituation, beispielsweise bei einem Stromausfall, ein Stellglied zum Einstellen einer Prozessfluidströmung in eine kontrollierte Notstellung zu bringen. Eine Not-stellung eines Ventilglieds kann beispielsweise eine vollständig geöffnete oder eine vollständig geschlossene Ventilstellung sein. Gattungsgemäße Stellgeräte werden in prozesstechnischen Anlagen, wie chemischen Anlagen, beispielsweise petrochemischen Anlagen, lebensmittelverarbeitenden Anlagen, wie Brauereien, Kraftwerken, beispielsweise Nuklearkraftwerken, oder dergleichen, eingesetzt. Für die Regelung sensibler Prozesse ist es bei solchen Anlagen zwingend erforderlich, dass das Auftreten eines unkontrollierten Betriebszustandes sicher ausgeschlossen ist. Bei Störungen von einzelnen Komponenten, Baugruppen oder Prozessen in einer prozesstechnischen Anlage, dient das Stellgerät mit Sicherheitsstellfunktion dem Zweck, eine definierte Notfallstellung beispielsweise eines Entlüftungsventils zu gewährleisten.

Ein gattungsgemäßes Stellgerät mit Sicherheitsstellfunktion und elektrischem Stellantrieb ist beispielsweise aus DE 195 19 638 A1 bekannt. Das bekannte Stellgerät umfasst einen Ventilstellantrieb mit einer Sicherheitsstellfunktion zur Betätigung des Ventils. Bei dem bekannten Stellgerät ist ein in Drehrichtung umkehrbarer Antriebsmotor vorgesehen, dessen Antriebskraft über ein Getriebe auf einen Stößel zur Ventilbetätigung wirken kann. Das Stellgerät umfasst ferner eine elektromagnetische Bremse bzw. Kupplung und einen auf den Stößel wirkenden Federspeicher, der im normalen Betrieb des Stellgeräts durch die Wirkung der elektromagnetischen Bremse bzw. Kupplung mit dem Antriebsmotor gekoppelt ist. Bei Ausfall der Stromversorgung wird das Ventil bei dem bekannten Stellgerät aus Sicherheitsgründen in eine definierte, in der Regel geschlossene, Ventilstellung gebracht, indem die elektrische Kupplung zwischen dem Elektromotor und dem Stößel gelöst wird, sodass der Federspeicher auf den Stößel einwirkt, um das Ventil in seine definierte (Schließ-) Stellung zu bringen. Bei dem bekannten Stellgerät ist der antreibende Elektromotor so ausgelegt, dass er ein ausreichendes Mindestdrehmoment bereitstellt, um das Stellglied, trotz der fortwährenden Einwirkung des Federspeichers, welcher das Stellventil in Richtung der Schließstellung drängt, in eine Soll-Stellung zu bewegen. Das bekannte Stellgerät hat sich in der praktischen Anwendung bewährt und erfreut sich großer Beliebtheit. Allerdings besteht der Wunsch danach, die Funktionalität des bekannten Stellgeräts auf einem geringeren Bauraum bereitzustellen, wobei die Anschaffungs- und Unterhaltskosten des Stellgeräts möglichst gering sein sollen.

EP 2 177 801 A1 beschreibt ein Stellgerät mit Sicherheitsstellfunktion für ein Abgasrückführventil bei dem der Abtrieb mittels Zahnstangenritzel und Zahnstange, welche mit einer Ventilstange verbunden ist, erfolgt. EP 2 177 801 A1 offenbart auch einen Elektromoter, ein Planetengetriebe und ist frei von einer lösbaren Kupplung.

Der Erfindung liegt die Aufgabe zugrunde, ein Stellgerät mit Sicherheitsstellfunktion bereitzustellen, das die Nachteile des Stands der Technik überwindet und bei dem insbesondere der erforderliche Bauraum reduziert ist, vorzugsweise unter gleichzeitiger Beibehaltung oder Verringerung der Anschaffungs- und Betriebskosten.

Diese Aufgabe wird gelöst durch den Gegenstand des unabhängigen Anspruchs 1.

Demnach ist ein Stellgerät mit Sicherheitsstellfunktion zum Betätigen eines Stellglieds, wie eines Ventilglieds, zum Einstellen einer Prozessfluidströmung einer prozesstechnischen Anlage vorgesehen, beispielsweise einer chemischen Anlage, etwa einer petrochemischen Anlage, einer lebensmittelverarbeitenden Anlage, wie einer Brauerei, einem Kraftwerk, wie einem Nuklearkraftwerk, oder dergleichen. Das erfindungsgemäße Stellgerät umfasst einen Elektromotor, wie ein bürstenloser Gleichstrommotor (BLDC), zum Bereitstellen eines Drehmoments für die Betätigung des Stellglieds. Der Elektromotor umfasst bevorzugt einen Rotor und einen Stator. Der Rotor und/oder der Stator umfasst je wenigstens drei Magnetspulen. Der Elektromotor und/oder der Stator können wenigstens einen Permanentmagneten aufweisen. Der Elektromotor kann insbesondere mit einer Drehzahl, vorzugsweise einer Nenndrehzahl, von 1.500 Umdrehungen pro Minute oder mehr, vorzugsweise 3.000 U/min oder mehr, besonders bevorzugt 10.000 U/min oder mehr, betrieben werden. Ferner umfasst das erfindungsgemäße Stellgerät eine Drehmomentübertragungsverbindung zum Koppeln des Elektromotors mit dem Stellglied für die Übertragung des Drehmoments von dem Elektromotor an das Stellglied. Die Drehmomentübertragungsverbindung umfasst eine Motorwelle, ein Getriebe, vorzugsweise ein mehrstufiges Planetengetriebe, und eine Abtriebswelle. Die Drehmomentübertragungsverbindung ist insbesondere die kinematische Verbindung von dem Elektromotor zu dem Stellglied und umfasst sämtliche drehmomentübertragende Komponenten, die zwischen dem Elektromotor und dem Stellglied wirksam sind. Die Drehmomentübertragungsverbindung ist frei von einer lösbaren Kupplung. Vorzugsweise besteht die Drehmomentübertragungsverbindung aus einer Motorwelle, einem Getriebe und einer Abtriebswelle. Die Motorwelle ist vorzugsweise die einzige Welle des Elektromotors und erstreckt sich aus dem Gehäuse des Elektromotors heraus. Die Antriebswelle oder Motorwelle kann den Elektromotor in dessen Axialrichtung durchdringen. Insbesondere ist denkbar, dass vorzugsweise unmittelbar in Axialrichtung vor und/oder hinter dem Elektromotor, eine Wälzlagerung, insbesondere ein Kugellager, zum Lagern der Motorwelle angeordnet ist. Das Getriebe ist vorzugsweise als Untersetzungsgetriebe ausgestaltet. Es kann ein einstufiges Planetengetriebe oder ein mehrstufiges Planetengetriebe sein, erfindungsgemäß ist ein mehrstufiges Planetengetriebe vorgesehen.

Vorzugsweise ist das Getriebe nicht selbsthemmend. Vorzugsweise ist die gesamte Drehmomentübertragungseinrichtung nicht selbsthemmend. Das Getriebe der Drehmomentübertragungseinrichtung, das Planetengetriebe, ist vorzugsweise dazu ausgelegt, eine Drehung des Elektromotors von mehr als 360°, mehr als 720°, mehr als 1.440°, mehr als 3.600° oder sogar mehr als 7.200° in eine kleinere abtriebsseitige Rotationsbewegung umzuwandeln, die beispielsweise geringer ist als 180°, vorzugsweise geringer als 135°, insbesondere geringer als 90°. Vorzugsweise ist das Getriebe der Drehmomentübertragungseinrichtung zum Untersetzen der antriebsseitigen Drehung des Elektromotors gemäß einem Untersetzungsfaktor von 500:1, 1000:1, 5000:1 oder in eine abtriebsseitige Rotationsbewegung umzuwandeln. Alternativ oder zusätzlich kann die Drehmomentübertragungsvorrichtung ein Stirnradgetriebe bzw. wenigstens eine Stirnradgetriebestufe aufweisen. Die Drehmomentübertragungsverbindung kann ein Rotations-Translations-Umwandlungsgetriebe zum Umwandeln einer rotatorischen Abtriebswellenbewegung in eine translatorische Stellgliedbewegung umfassen. Alternativ kann ein insbesondere als Drehventil ausgestaltetes Stellglied ohne Umwandlung einer rotatorischen in eine translatorische Stellbewegung betätigt werden. Das Stellglied ist bevorzugt ein Ventilglied, wobei das Stellglied den eigentlichen Ventilgliedkopf sowie eine ein- oder mehrteilige Ventilstange umfassen kann. Mehrteilige Ventilstangen, die beispielsweise aus zwei oder mehr Stangenabschnitten, welche vorzugsweise koaxial zueinander angeordnet sind, und mit einem oder mehr Stangenverbinder zusammengesetzt sind, werden häufig eingesetzt, um das Montieren oder Justieren eines Ventilglieds zu erleichtern.

Der Elektromotor hat vorzugsweise eine dreisträngige Drehstromwicklung und kann durch eine Steuerungselektronik, beispielsweise umfassend einen Mikrocontroller oder Mikroprozessor, angesteuert werden. Der Elektromotor weist einen vorzugsweise permanenterregten Motor auf, der eine vorbestimmte Anzahl von Permanentmagneten aufweist, deren Anzahl der Wicklungsanzahl der Spulen der Drehstromwicklung entsprechen kann. Vorzugsweise umfasst der Elektromotor einen Rotor mit wenigstens einem Permanentmagnet und einen Stator, an dem Elektromagnete einer Drehstromwicklung angeschlossen sind. Das erfindungsgemäße Stellgerät umfasst ferner ein Zwangsstellmittel, wie ein insbesondere mechanischer Federspeicher, insbesondere ein Rotationsfederspeicher, das eine Zwangswirkung zum Verbringen des Stellglieds in eine Sicherheitsstellung in die Drehmomentübertragungsverbindung einleitet.

Durch die kupplungsfreie Drehmomentübertragungsverbindung sind Motor und Abtrieb stets drehmomentübertragend verbunden. Betriebsgemäß ist bei dem erfindungsgemäßen Stellgerät keine Trennung der Drehmomentübertragungsverbindung möglich. Das erfindungsgemäße Stellgerät bedient sich eines stromlos im Wesentlichen drehmomentfreien Elektromotors, welcher das Zwangsmittel nicht daran hindert, den Stellantrieb in seine Sicherheitsstellung zu bringen. Entgegen der gängigen Vorstellung, dass ein Stellgerät mit Sicherheitsstellfunktion, welche sich eines Getriebes, insbesondere eines Untersetzungsgetriebes, zur Drehmomentübertragung von einem Elektromotor zu einer Abtriebswelle bedient, stets einer Kupplung Bedarf, um im Sicherheitsfall die Abtriebswelle von dem Getriebe oder dem Motor zu lösen, sodass ein Zwangsmittel die Abtriebswelle in die Sicherheitsstellung bringen kann, hat sich überraschenderweise herausgestellt, dass die Verwendung eines Elektromotors insbesondere in Verbindung mit einem Planetengetriebe, eine Sicherheits-Stellfunktion ohne lösbare Kupplung erlaubt. Dank dieser überraschenden Erkenntnis kann die erfindungsgemäße Stellgeräteanordnung auf eine Kupplung verzichten und den für eine Kupplung erforderlichen Bauraum sparen. Ebenso können die Kosten für den Erwerb und Einbau einer Kupplung vermieden werden. Dennoch bleibt eine zuverlässige Sicherheitsstellfunktion uneingeschränkt vorhanden.

Gemäß einer bevorzugten Ausführung eines erfindungsgemäßen Stellantriebs weist der Elektromotor als vorbestimmte Betriebszustände einen Antriebszustand, einen Haltezustand, einen Bremszustand und/oder einen Freilaufzustand auf. Gemäß einer entsprechenden Weiterbildung umfasst das Stellgerät eine Motorsteuerungselektronik zum Veranlassen eines der vorbestimmten Betriebszustände des Elektromotors. Der Antriebszustand kann beispielsweise eine umlaufende, vorzugsweise paarweise Ansteuerung der elektromagnetischen Spule bzw. Elektromagneten des Elektromotors umfassen, vorzugsweise in umlaufender Reihenfolge, um dem permanenterregten Stator (oder Rotor) einen Drehmoment mitzuteilen, sodass der Elektromotor eine Antriebsbewegung durchführt. Der Elektromotor hat vorzugsweise eine mehrsträngige, insbesondere dreisträngige, Drehstromwicklung und kann durch eine Steuerungselektronik, beispielsweise umfassend eine analoge Blockschaltung, einen Mikrocontroller oder Mikroprozessor, angesteuert werden. Bei einem Elektromotor mit mehrsträngiger Drehstromwicklung können mehrere Spulen zu Spulengruppen zusammengefasst je einem Wicklungsstrang zugeordnet sein. Die Steuerungselektronik kann vorzugsweise dazu ausgelegt sein, die Spulen einer Spulengruppe gemeinsam und/oder mit demselben Steuersignal anzusteuern. Insbesondere kann die Steuerungselektronik dazu ausgelegt sein, jede Spulengruppe unabhängig von anderen Spulengruppen anzusteuern.

In einem Haltezustand des Elektromotors können die Spulen bzw. Elektromagnete oder Spulengruppen des Elektromotors mit einem konstanten Haltestrom angesteuert werden. In dem Haltezustand kann ein Paar insbesondere diametral gegenüberliegende Spulen, zwei Paare insbesondere diametral gegenüberliegende Spulen oder mehrere Paare jeweils insbesondere diametral gegenüberliegende Spulen mit einem Haltestrom angesteuert werden, wobei vorzugsweise ein Spulenpaar-Haltestrom individuell definiert ist. In dem Haltezustand kann eine Spulengrupp, zwei Spulengruppen oder mehrere Spulengruppen mit einem Haltestrom angesteuert werden, wobei vorzugsweise ein Spulengruppen-Haltestrom gruppenweise individuell definiert ist. Ein erstes Paar Spulen oder eine erste Spulengruppe kann mit einem ersten Haltestrom angesteuert werden und ein zweites Paar Spulen oder eine zweite Spulengruppe kann einen zweiten Haltestrom erhalten. Auf diese Weise kann der Stator zum Einnehmen einer vorbestimmten Position relativ zu dem Rotor des Elektromotors einzunehmen gezwungen werden. Vorzugsweise kann in einem Haltezustand der Stator relativ zu dem Rotor des Elektromotors eine Winkelstellung einnehmen, die der Winkelstellung der gegenüberliegend wirkenden Magnete (Elektromagneten und/oder Permanentmagneten) entspricht. Durch Ansteuerung mehrerer vorzugsweise benachbarter Paare jeweils einander gegenüberliegender Elektromagneten oder mehrerer benachbarter Spulengruppen sind ferner auch solche Stellungen für den Elektromotor einstellbar, welche zwischen der Winkelstellung der benachbarten Elektromagnetpaare oder -gruppen liegt. Vorzugsweise ist eine Winkelstellungssensorik vorgesehen, welche der Motorsteuerung eine Ist-Winkelstellung des Stators relativ zu dem Rotor mitteilt, sodass die Motorsteuerungselektronik einen Haltestrom für ein Spulenpaar bzw. Halteströme für mehrere Spulenpaare entsprechend der Winkelstellung generieren kann. In einem Bremszustand des Elektromotors kann dieser dazu ausgelegt sein, bremsend entgegen einer Rotationsbewegung zu wirken, die beispielsweise durch das Zwangsmittel veranlasst sein kann, vorzugsweise mittels Ansteuerung eines oder mehrerer Spulenpaare, vorzugsweise entsprechend einer Drehstellung und/oder Drehbewegung des Stators relativ zu dem Rotor. Eines oder alle Spulenpaare können für den Bremszustand kurzgeschlossen sein. Um gesteuerte Bremswirkung bzw. eine bestimmte Dämpfungswirkung zu erzielen, können ein Spulenpaar, zwei Spulenpaare, mehrere Spulenpaare oder sämtliche Spulenpaare mithilfe der Motorsteuerungselektronik zyklisch (pulsartig) kurzgeschlossen sein. Für den Bremszustand kann die Motorsteuerungselektronik eine Winkelstellungssensorik verwenden, welche die Ist-Winkelstellung des Stators relativ zu dem Rotor erfasst, um das oder die Spulenpaare entsprechend anzusteuern.

In einem Freilaufzustand können vorzugsweise die Spulen des Elektromotors stromlos geschaltet sein. Vorzugsweise ist in dem Freilaufzustand ein Widerstands-Drehmoment des Elektromotors näherungsweise o Nm, insbesondere kleiner als das von einem Zwangsstellmittel insbesondere durch die Drehmomentübertragungsverbindung am Motor bereitgestellte Drehmoment. Selbst bei einer deutlichen Untersetzung mithilfe des Getriebes der Drehmomentübertragungsverbindung ist mit dem Freilaufzustand des Elektromotors sichergestellt, dass der Drehmomentübertragungsverbindung kein ausreichend großer Drehmoment von Seiten des Motors bereitgestellt wird, welcher unter Berücksichtigung des Untersetzungsgetriebes genügen könnte, um der Rückstellwirkung des Zwangsmittels, insbesondere der Rückstellfeder, zu widerstehen. In dem Freilaufzustand kann die Motorsteuerungselektronik der Motorsteuerung gegebenenfalls eine geringe Spannung oder einen geringen Strom bereitstellen, welcher einen Antriebsdrehmoment bewirkt, der unterhalb eines Drehmoment-Schwellenwerts liegt, welcher den Elektromotor in Kombination mit dem Getriebe zu einer Hemmwirkung im Hinblick auf das Zwangsmittel veranlassen würde. Vorzugsweise verwendet die Motorsteuerungselektronik und/oder die Stellgeräte-Steuerungselektronik in dem Haltebetriebszustand und/oder dem Bremsbetriebszustand keine mechanische oder elektromagnetische Bremse mit Ausnahme des Elektromotors selbst, welcher als Bremse wirkt.

Die Motorsteuerungselektronik ist signalübertragungsgemäß mit den Spulen bzw. Elektromagneten des Elektromotors verbunden. Die Motorsteuerungselektronik kann eine Winkelstellungssensorik aufweisen, welche die relative Winkelstellung des Stators des Elektromotors relativ zu dessen Rotor erfasst. Die Motorsteuerungselektronik kann einen Mikrocontroller, einen Mikroprozessor oder dergleichen aufweisen. Die Steuerungselektronik des Elektromotors kann einen Frequenzumrichter, insbesondere mit vorzugsweise sensorgesteuerter Blockkommutierung, aufweisen. Ein Frequenzumrichter der Steuerungselektronik kann eine einfache Blockkommutierung ohne Mikrocontroller umfassen. Die Steuerungselektronik kann einen Mikrokontroller zur kommutierten Ansteuerung umfassen. Die Steuerungselektronik kann MOSFETs, Transistoren, Relais oder dergleichen zum Ansteuern wenigstens einer Spule aufweisen. Die Steuerungselektronik kann signalübertragungsgemäß mit einer Sensorik zur Erfassung der Winkelstellung des Rotors relativ zum Stator aufweisen. Es ist auch denkbar, dass die Steuerungselektronik frei von einer Signalübertragungsverbindung von einer Winkelstellungssensorik, insbesondere von einer Sensorik im Allgemeinen, ist. Der Elektromotor kann sensorgesteuert oder sensorlos sein. Ein sensorgesteuerter Elektromotor umfasst wenigstens einen Sensor zum Erfassen der Winkelstellung des Rotors relativ zu dem Stator, wobei die Steuerungselektronik dazu ausgestaltet ist, die Elektromagnete der Drehstromwicklung gemäß der erfassten Winkelstellung des Rotors relativ zu dem Stator anzusteuern. Es ist auch denkbar, dass der Elektromotor einen Stator mit Permanentmagneten und einem Rotor mit Elektromagneten aufweist. Vorzugsweise ist der Elektromotor derart ausgestaltet, dass ein Halte-Drehmoment in einem unbestromten Zustand des Elektromotors gleich o Nm oder im Wesentlichen gleich o Nm, vorzugsweise kleiner ist als das von einem Zwangsstellmittel insbesondere durch die Drehmomentübertragungsverbindung am Motor bereitgestellte Drehmoment. Vorzugsweise kann der Elektromotor durch die Steuerungselektronik derart konfiguriert sein, dass genau eine Spule, genau zwei Spulen, genau drei Spulen oder mehr mit einem Haltestrom insbesondere gleichzeitig angesteuert werden können.

Gemäß einer bevorzugten Weiterbildung der Erfindung verfügt die Motorsteuerungselektronik über eine Winkellage-Sensorik, wie ein magnetempfindlicher Sensor, zum Erfassen einer Ist-Winkellage des Elektromotors, und die Motorsteuerungselektronik ist dazu ausgelegt, Elektromotor unter Berücksichtigung seiner Ist-Winkellage zu betätigen. Auf diese Weise kann beispielsweise kann eine bestimmte Haltestellung, ein bestimmter Antriebs- oder Brems-Drehmoment, eine bestimmte Antriebsbewegungs- oder Bremsbewegungs-Geschwindigkeit oder -Beschleunigung des Elektromotors erreicht werden. Insbesondere kann eine Winkellage-Sensorik mittels der Motorsteuerungselektronik sowie gegebenenfalls unter- oder übergeordneter Stellgeräte-Steuerungselektronik für eine präzise Positionierung des Stellglieds, insbesondere des Ventilglieds, des Stellgeräts verwendet werden. Auf diese Weise kann eine genaue Sensorik für eine präzise Positionsregelung des Stellglieds verwendet werden, insbesondere bei Verwendung eines Untersetzungsgetriebes, durch welches ein großer Weg an der Antriebswelle des Motors in einen kleinen Stellweg des Stellglieds umgewandelt wird.

Indem die Motorsteuerungselektronik zur Betätigung des Elektromotors dessen Ist-Winkellage, vorzugsweise die Winkellage des Stators relativ zu dem Rotor, berücksichtigt, kann die Motorsteuerungselektronik die zu der Ist-Winkelstellung bzw. -lage passende(n) Spule(n) bestromen, um einen größtmöglichen Drehmoment, beispielsweise zum Bereitstellen einer Haltekraft, in jeder beliebigen Relativwinkelstellung bereitstellen zu können.

Gemäß einer bevorzugten Ausführung eines erfindungsgemäßen Stellantriebs weist der Elektromotor wenigstens einen Betriebszustand, wie einen Freilaufzustand oder einen Bremszustand, auf, in dem das Drehmoment des Elektromotors derart gering ist, dass das Stellglied durch das Zwangsstellmittel bei ununterbrochener Drehmomentübertragungsverbindung in die Sicherheitsstellung verbringbar ist, wobei insbesondere der Elektromotor in dem Freilaufzustand unbestromt ist oder mit einer niedrigen Spannung unterhalb eines Grenzwertes bestromt ist. Dieser Grenzwert kann als Haltegrenzwert bezeichnet sein. Der Haltegrenzwert ist erreicht, wenn die dem Elektromotor zugeführte Spannung einen ausreichend hohen Drehmoment bereitstellt, um in einer optimalen Relativwinkellage des Stators zum Rotor einen ausreichenden Widerstands-drehmoment bereitzustellen, welcher zusammen mit dem Getriebe einen derart hohen Widerstands-Drehmoment entgegen dem Drehmoment des Zwangsstellmittels bewirkt, sodass das Zwangsstellmittel keine Bewegung des Stellglieds in dessen Sicherheitsstellung bewirken kann. Der untere Haltegrenzwert bestimmt sich in dem Fall, in welchem die Relativwinkelstellung zum Erreichen eines maximalen Wirkungsgrades optimal ist. Es kann ein oberer Haltegrenzwert definiert sein, welcher bei einer anderen, vorzugsweise beliebigen, Relativwinkelstellung des Stators relativ zu dem Motor, insbesondere der Relativstellung mit dem ungünstigsten oder niedrigsten Wirkungsgrad, dennoch eine selbsthemmende Wirkung in Kombination mit dem Getriebe entfaltet. Bei einem Strom unterhalb des unteren Haltegrenzwertes ist stets sichergestellt, dass ein Freilauf des Stellgeräts in dessen Sicherheitsstellung erfolgen kann.

Gemäß einer bevorzugten Ausführung eines erfindungsgemäßen Stellantriebs weist das Stellgerät einen Haltezustand auf, in dem der Elektromotor, insbesondere mit einer geringen, Spannung bestromt ist und das Stellglied entgegen dem Zwangsstellmittel in einer konstanten Stellung hält. Der Stellantrieb, insbesondere das Zwangsstellmittel, können innerhalb eines gewissen Halte-Toleranz-Bereichs, wie einer Hysterese, mit Drehmomenten von dem Elektromotor beaufschlagt sein, ohne dass eine Stellgliedbewegung erfolgt. In dem Haltebetriebszustand wird von der Motorsteuerungselektronik der Elektromotor dergestalt angesteuert, dass ein ausreichend hoher Drehmoment bereitgestellt ist, um eine Verbringung des Stellglieds in dessen Sicherheitsstellung durch die Kraft des Zwangsstellmittels zu vermeiden. In dem Haltezustand steuert die Motorsteuerungselektronik den Elektromotor mit einem Steuerstrom an, welcher ein Drehmoment bewirkt, das das Stellglied nicht entgegen der Wirkung des Zwangsstellmittels in Richtung einer Betriebsstellung, weg von der Sicherheitsstellung, verfährt. In dem Haltebetriebszustand setzt die Motorsteuerungselektronik bzw. die Stellgerätesteuerungselektronik vorzugsweise keine mechanische oder elektromechanische Bremse mit Ausnahme des als Bremse wirkenden Elektromotors selbst ein. Mithilfe einer Winkelstellungssensorik kann die relative Ist-Winkelstellung des Stators relativ zu dem Rotor des Elektromotors erfasst werden, sodass die Motorsteuerungselektronik den Elektromotor so ansteuern kann, dass nur ein Paar insbesondere diametral gegenüberliegender Spulen bestromt ist oder dass zwei vorzugsweise benachbarte Paare einander jeweils insbesondere diametral gegenüberliegender Spulen bestromt sind, um die elektromagnetische Haltekraft zu bewirken und so den Stator relativ zu dem Rotor in einer bestimmten Radialrichtung des Elektromotors zu halten.

Gemäß einer bevorzugten Weiterbildung des Stellantriebs ist die Motorsteuerungselektronik dazu ausgelegt, zum Veranlassen des Haltezustands wenigstens eine Spule und/oder wenigstens ein Paar vorzugsweise gegenüberliegender Spulen und/oder wenigstens eine Spulengruppe des Elektromotors mit einem, insbesondere konstanten und/oder kontinuierlichen, Haltesteuerstrom zu betätigen. Insbesondere betätigt die Motorsteuerungselektronik genau eine Spule oder genau ein Spulenpaar oder genau eine Spulengruppe.

Gemäß einer bevorzugten Ausführung der Erfindung bringt der Elektromotor in dem Bremszustand ein Drehmoment auf, das die Geschwindigkeit reduziert, mit der das Stellglied durch das Zwangssteuermittel in die Sicherheitsstellung verbracht wird.

Gemäß einer bevorzugten Weiterbildung der Erfindung schließt die Motorsteuerungselektronik zum Veranlassen des Bremszustands temporär, insbesondere kurzzeitig und/oder zyklisch, wenigstens eine Spule des Elektromotors kurz.

Gemäß einer bevorzugten Weiterbildung der Erfindung ist der Elektromotor dazu ausgelegt, in dem Bremszustand als Generator zu wirken und insbesondere Energien an eine Speichereinrichtung, wie einen Akkumulator oder eine Kapazität abzugeben.

Gemäß einer bevorzugten Ausführung eines erfindungsgemäßen Stellantriebs ist der Stellantrieb frei von einer Haltebremse und/oder frei von einer Fliehkraftbremse, insbesondere frei von einer jeglichen Bremse ausgeführt.

Gemäß einer bevorzugten Ausführung eines erfindungsgemäßen Stellantriebs sind (erstens) der Elektromotor, (zweitens) die Drehmomentübertragungsverbindung und (drittens) das Zwangsstellmittel koaxial zueinander angeordnet. Insbesondere betrifft die koaxiale Anordnung der Drehmomentübertragungsverbindung sowohl deren Motorwelle als auch deren Getriebe, welches vorzugsweise als mehrstufiges Planetengetriebe ausgestaltet ist, wie auch deren Abtriebswelle. Koaxial an der Drehmomentübertragungsverbindung, insbesondere der Abtriebswelle, kann ein Exzenter angeordnet sein, um ein Stellglied linear zu betätigen.

Weitere Vorteile, Merkmale und Eigenschaften der Erfindung werden durch die folgende Beschreibung bevorzugter Ausführungen der Erfindung anhand der beiliegenden Zeichnungen deutlich, die zeigen:
- Fig.1: eine Schnittansicht eines erfindungsgemäßen Stellantriebs gemäß einer ersten Ausführung;
- Fig. 2a: eine schematische Ansicht der Ansteuerung eines Elektromotors in einem Antriebszustand;
- Fig. 2b: eine schematische Ansicht der Ansteuerung eines Elektromotors in einem Haltezustand;
- Fig. 2c: eine schematische Ansicht der Ansteuerung eines Elektromotors in einem Bremszustand; und
- Fig. 3: eine Schnittansicht eines Stellantriebs gemäß einer

zweiten, nicht erfindungsgemäßen, Ausführung.

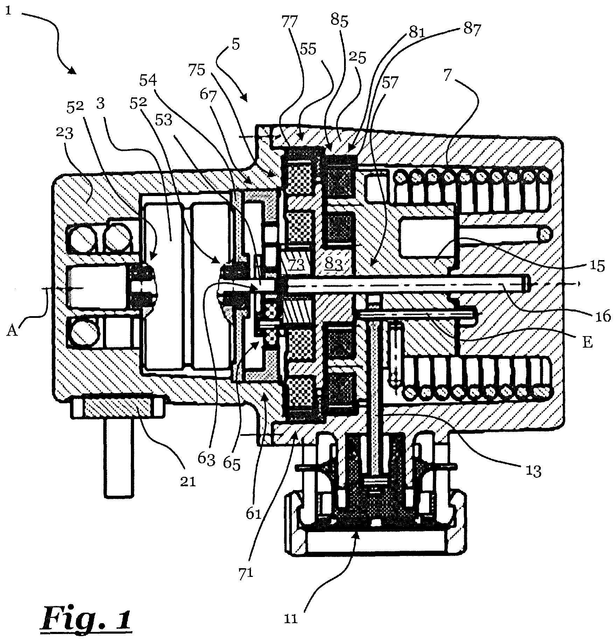

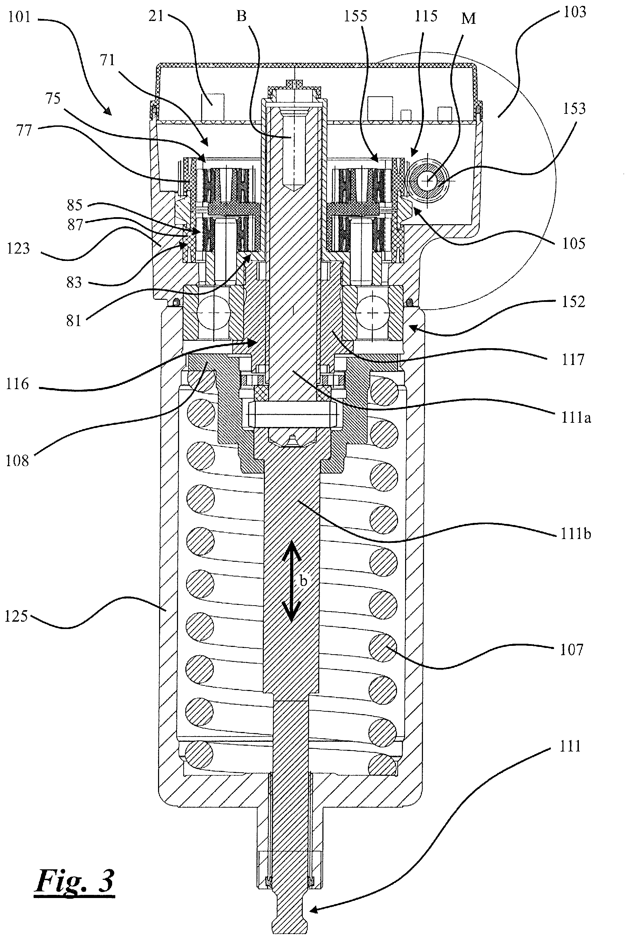

Das in der Figur 1 dargestellte erfindungsgemäße Stellgerät ist im Allgemeinen mit der Bezugsziffer 1 versehen. Das erfindungsgemäße Stellgerät gemäß Figur 3 hat im Allgemeinen die Bezugsziffer 101. Das Stellgerät 1 bzw. 101 umfasst als Hauptbestandteile einen Elektromotor in Form eines bürstenlosen Gleichstrommotors 3, der auch als sogenannter BLDC-Motor bezeichnet sein kann, eine Drehmomentübertragungsverbindung 5 und ein hier als mechanischer Rotationsfederspeicher 7 ausgestaltetes Zwangsstellmittel. Die Drehmomentübertragungsverbindung 5 übermittelt den Antriebsdrehmoment von den Gleichstrommotor 3 zu einem nicht näher dargestellten Ventilglied oder anderen Stellglied, das beispielsweise mit dem in Figur 1 abgebildeten Abtriebskolben 11 oder dem in Figur 3 abgebildeten Abtriebskolben 111 betätigt sein kann. Für dieselben oder ähnliche Komponenten der Stellgeräte 1 und 101 sind dieselben oder ähnliche um 100 erhöhte Bezugszeichen gewählt.

Das elektrische Stellgerät 1 weist eine Achse A auf, um welche sich drehbare Komponenten des Elektromotors 3 und der Drehmomentübertragungsverbindung 5 koaxial drehen. Die als Rotationsfederspeicher 7 realisiert eine Zwangsstellvorrichtung ist ebenfalls koaxial zu der Achse A angeordnet.

Die kinematische Verbindung von dem Elektromotor 3 zu dem linearen Abtrieb in Form des hier exemplarisch dargestellten Kolben 11 ist realisiert durch die von dem Motor ausgehende Antriebswelle 53, welche ein Getriebe 55, hier ein dreistufiges Planetengetriebe, antreibt, wobei das Getriebe 55 ein Rotations-Translations-Getriebe in Form eines Exzenters 15 aufweist, welcher koaxial zu der Stellantriebsachse A rotiert und eine Exzenterachse E aufweist, an welcher ein Hebel 13 zum translatorischen Betätigen des Abtriebskolbens 11 angelenkt ist.

Die Drehmomentübertragungsverbindung 5 umfasst keine lösbare Kupplung. Die Drehmomentübertragungsverbindung 5 stellt stets eine kinematische Verbindung zwischen dem Abtrieb (Hubkolben 11) und dem Antrieb (Elektromotor 3) bereit. Betriebsgemäß ist die Drehmomentübertragungsverbindung 5 nicht unterbrechbar.

Bei der hier exemplarisch dargestellten bevorzugten Ausführung ist die Drehmomentübertragungsverbindung 5 frei von einer Bremse. Die Drehmomentübertragungsverbindung 5 umfasst insbesondere keine Fliehkraftbremse. Vorzugsweise umfasst die Drehmomentübertragungsverbindung 5 keine Haltebremse.

Die Ist-Stellung des Abtriebskolbens 11 ist bei dem Stellgerät 1 abhängig von dem Verhältnis der Kräfte bzw. Drehmomente, die bereitgestellt werden, einerseits durch den Elektromotor 3 und andererseits durch den Rotationsfederspeicher 7. Mit dem Hubkolben 11 kann beispielsweise ein Stellventil (nicht näher dargestellt) betätigt werden, welches sich in einem Notzustand vollständig öffnen (oder alternativ: vollständig schließen) soll. Die Rückstellkraft des Federspeichers 7 kann in diesem Fall dazu ausgelegt sein, den Exzenter 15 beispielsweise gegen den Uhrzeigersinn (oder im Uhrzeigersinn) zu drehen, bis der Hubkolben 11 beispielsweise in eine oberste Stellung verbracht ist. Ein mit dem Hubkolben 11 kraft- und/oder formschlüssig verbundenes Ventil könnte entsprechend in eine beispielsweise oberste, vollständig geöffnete (oder vollständig geschlossene) Stellung verbracht werden.

Der Elektromotor 3 kann einen Antriebsdrehmoment bereitstellen, welcher über die Antriebswelle 53 aus dem Motor 3 in die Drehmomentübertragungsverbindung 5 eingeleitet und über die Abtriebswelle 57 mittels des Exzenters 13 als lineare Stellkraft zu dem Abtriebskolben 11 übermittelt wird. Eine Soll-Stellung des Ventilglieds kann beispielsweise dadurch eingestellt werden, dass ein Gleichgewichtszustand zwischen dem Motordrehmoment und dem Rückstelldrehmoment der Feder 7 realisiert ist, oder indem der Elektromotor 3 zum Erreichen einer bestimmten Haltestellung angesteuert wird, wobei die Haltekraft des Elektromotors insbesondere unter Berücksichtigung der Untersetzungswirkung des dreistufigen Planetengetriebes 55 eine Hemmung der Drehmomentübertragungsverbindung 5 entgegen einer Bewegung durch die Rückstellfeder 7 bewirkt.

Für eine Betätigungsbewegung zum Erreichen einer Soll-Stellung, beispielsweise einer vollständig geschlossenen Stellung oder einer beliebigen, einstellbaren Stellung zwischen einer vollständig geschlossenen Stellung und einer vollständig geöffneten Stellung bzw. einer obersten Abtriebskolbenstellung und einer untersten Abtriebskolbenstellung kann eine Steuerungselektronik 21 vorgehen sein, welche den Elektromotor 3 ansteuert, um eine Bewegung der Antriebswelle 3 und dadurch mittelbar auch des Hebels 13 zur Betätigung des Abtriebskolbens 11 zu bewirken.

Das bei der in Figur 1 dargestellten bevorzugten Ausführung abgebildete Getriebe 55 ist ein dreistufiges Planetengetriebe. Die Motorwelle 53 ist drehfest mit einem Sonnenrad 63 an einer ersten Getriebestufe 61 verbunden. Die erste Getriebestufe 61 umfasst ein ortsfest an dem Stellgerätegehäuse 23 gehaltenes Hohlrad 67 und drei oder fünf Planetenräder 65, welche über einen abtriebsseitigen Planetensteg miteinander verbunden sind.

Der Planetensteg der Planetenräder 65 der ersten Getriebestufe 61 bildet ein Sonnenrad 73 der zweiten Getriebestufe 71. Die zweite Getriebestufe 71 umfasst ein an dem Gehäuse 25 des Stellgeräts 1 ortsfestes Hohlrad 77 sowie drei oder fünf Planetenräder, welche durch einen Planetensteg miteinander verbunden sind, der das Sonnenrad 83 der dritten Planetengetriebestufe 81 bildet.

Das Gehäuse des Stellgeräts 1 umfasst wie hier dargestellt beispielsweise zwei Halbschalen 23, 25, die drehfest aneinander geflanscht sind. Die Gehäuseschalen können als Motorgehäuseschale 23 und Exzentergehäuseschale 25 benannt sein, entsprechend der Hauptkomponenten, welche sie tragen.

Der Elektromotor 3 ist in der Motorgehäuseschale 23 ortsfest montiert. Die Antriebswelle oder Motorwelle 53, an welcher der Rotor des Elektromotors 3 drehfest befestigt ist, erstreckt sich in Axialrichtung A durch das Gehäuse des Motors 3 hindurch und ist beidseitig unmittelbar angrenzend an das Motorgehäuse mit je einer Kugellagerung 52 gehalten, die sich direkt oder indirekt an dem Gehäuse 23 abstützt. Für eine indirekte Halterung einer Wälzlagerung, wie einem Kugellager 52, kann drehfest an dem Gehäuse 23 eine Haltescheibe 54 oder ein Haltesteg angeordnet sein, der quer zu der Axialrichtung A außenseitig an dem Gehäuse 23 gehalten ist, und der im achsennahen Bereich eine Aufnahme für das Kugellager 52 aufweist. An dieser Aufnahme kann sich auch das Gehäuse des Elektromotors 3 abstützen.

Die dritte Getriebestufe 81 hat ein an dem Gehäuse 25 ortfestes Hohlrad, in dem die Planetenräder 85 abrollen, welche mit dem Exzenter 15 verbunden sind und diesen mitnehmen. Der Exzenter 15 ist durch eine koaxiale Tragachse 16 gelagert, welche sich an dem Gehäuse 25 abstützt und auch die Sonnenräder 73, 83 der zweiten und dritten Getriebestufe 71, 81 trägt. Der Exzenter 15 kann um die Lagerachse 16 eine Drehung von vorzugsweise weniger als 180°, insbesondere weniger als 135°, vollführen, um den Hubkolben 11 von einer unteren Extremstellung zu einer oberen Extremstellung zu bewegen. Eine darüberhinausgehende Drehung kann bei einer optionalen Ausführung durch den Lagerachsenkörper 16 verhindert sein, welcher bei Erreichen eines Anschlagswinkels mit dem Hebel 13 in einen Endanschlagseingriff gelangt.

Der Elektromotor 3 kann sich über mehr als 360° drehen. Die Drehantriebsbewegung des Motors 3 bzw. der Motorwelle 53 wird über das Getriebe 55 untersetzt und an den Exzenter 15 weitergegeben, sodass der Motor 3 für einen bestimmten Stellweg des Abtriebskolbens 11 und eine entsprechende Rotation des Exzenters 15 eine sehr viel größere Antriebsbewegung absolviert. Dadurch kann ein schnelldrehender Motor mit geringem Drehmoment für große Abtriebskräfte verwendet werden, was die Auslegung des Stellgeräts 1 günstiger macht. Gleichzeitig wird durch die Verwendung eines mehrstufigen Planetengetriebes nur ein geringer Bauraum benötigt.

Das Getriebe 55 ist derart leichtgängig ausgeführt, dass es nicht selbsthemmend ist. Die Rückstellkraft von der Feder 7 wird also durch das Getriebe 55 zur Motorwelle 53 übertragen. Bei einem Stromausfall oder einer stromlos-Schaltung des Motors 3 wirkt der Elektromotor 3 freilaufend, vorzugsweise bei verschwindend geringem Restdrehmoment, vorzugsweise gleich oder etwa gleich o Nm.

Dem Motor entgegen wirkt die Rückstellkraft der Feder 7 und leitet ein RückstellDrehmoment über das Getriebe 55 in die Motorwelle 53 ein, welche bei geringem oder nicht vorhandenem Rest-Drehmoment entsprechend der Federwirkung 7 rotiert. Wenn der Motor 3 stromlos geschaltet ist, befindet er sich vorzugsweise in einem Freilaufbetriebszustand, in welchem kein oder nahezu kein Drehmoment von dem Motor 3 auf die Motorwelle 53 wirkt. In dem Freilaufbetriebszustand des Motors 3 kann die Feder 7 durch das Getriebe 55 die Motorwelle 53 drehen. Der in Reihe geschalteten Motor 3 und das Getriebe 55 sind also in einem Freilaufbetriebszustand des Motors 3 nicht selbsthemmend. Die Feder 7 kann dann den Abtriebskolben 11 in seiner Not-Stellung, beispielsweise seiner obersten bzw. vollständig geöffneten Stellung, bringen.

Der Motor 3 kann so ausgestaltet sein, dass er bei einer Drehung der Motorachse 53 durch die Wirkung der Feder 7 als Bremse wirkt, welche die Not-(Schließ-)Betätigung abbremst, um eine schlagende Ventil-(Schließ-)Bewegung zu verhindern. Wenn der Motor 3 bremsend auf einen durch die Feder 7 veranlasste Rückstell-Bewegung der Motorwelle 53 wirkt, kann der von dem Rotor in den Stator induzierte Strom des Motors 3 beispielsweise mithilfe der Stellungsreglerelektronik 21 abgegriffen und in einem nicht näher dargestellten Akkumulator gespeichert werden.

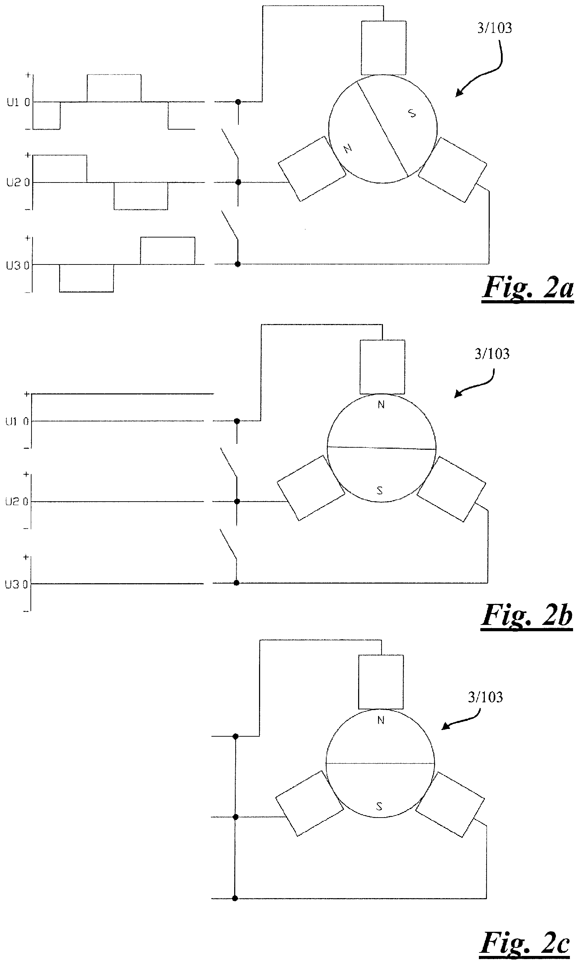

Fig. 2a, 2b und 2c zeigen schematisch und ausschnittsweise einen Elektromotor mit einem Teil der vorgeschalteten Steuerungselektronik und schematische Darstellung der Steuersignale. Fig. 2a zeigt eine drehende Betätigung bzw. Bestromung von drei einzelnen Stator-Spulen des Elektromotors zum Drehbetätigen des permanentmagnetischen Rotors für einen Antriebszustand. Fig. 2b zeigt eine statische Bestromung einer einzigen Spule, welche dadurch ein elektromagnetisches Feld zum Anziehen und Ausrichten des permanentmagnetischen Rotors erzeugt, so dass der Elektromotor einen Haltezustand einnimmt. Bei Fig. 2c sind die Stromkreise der drei Spulen des Elektromotors kurzgeschlossen (und empfangen keinen Steuerstrom), so dass der Elektromotor selbsttätig abbremst, also einen Bremszustand einnimmt.

Das in Figur 3 abgebildete elektrische Stellgerät 101 weist eine Motorachse M auf, um welche sich drehbare Komponenten des Elektromotors 103 drehen, und es weist ein zu der Motorachse M Windschiefe (vorzugsweise quer zur Motorachse M versetzte und senkrecht bezüglich der Motorachse M orientierte) Betätigungsachse B auf. Um die Betätigungsachse B dreht sich die Antriebsspindel 116. Der Abtriebskolben 111 bewegt sich koaxial zu der Betätigungsachse B translatorisch. Die als Druckfederspeicher 107 realisiert Zwangsstellvorrichtung ist koaxial zu der Betätigungsachse B angeordnet.

Die kinematische Verbindung von dem Elektromotor 103 zu dem translatorischen Abtrieb in Form des beispielhaft dargestellten Abtriebskolbens 111 ist realisiert durch die von dem Motor 103 ausgehende Antriebswelle 153, welche eine Getriebe antreibt, das ein zweistückiges Planetengetriebe 155 umfasst. Die Drehmoment-Übertragungs-Verbindung 105 umfasst motorseitig eine Antriebsspindel 115 an der Motorwelle 153 zum Umwandeln der Drehbewegung um die Motorachse M in eine Drehung um die Betätigungsachse B: Die Drehmoment-Übertragungs-Verbindung umfasst ein Rotations-Translations-Getriebe in Form des Spindelgetriebes 116, das die Drehbewegung um die Betätigungsachse B in eine translatorische Bewegung gemäß der Orientierung der Betätigungsachse B umwandelt.

Von einer betriebsgemäßen lösbaren Kupplung ist die DrehmomentÜbertragungsverbindung 105 frei. Sie stellt stets eine kinematische Verbindung zwischen dem Abtrieb (Hubkolben 111) und dem Antrieb (Elektromotor 103) bereit. Betriebsgemäß ist die Drehmomentübertragungsverbindung 105 nicht unterbrechbar, obgleich beispielsweise zu Wartungszwecken oder bei der Montage des Stellgeräts 101 und der darin vorgesehenen Drehmoment-Übertragungs-Verbindung 105 beispielsweise der Stift zwischen dem oberen Teil 111a und dem unteren Teil 111b des Hubkolbens 111 entfernt und die beiden Hubkolbenteile 111a, 111b so voneinander gelöst werden können.

Die in Figur 3 dargestellte nicht erfindungsgemäße Ausführung weist eine Drehmoment-Übertragungs-Verbindung 105 auf, die frei von einer Bremse ist. Insbesondere umfasst die Drehmoment-Übertragungs-Verbindung 105 keine Fliehkraftbremse. Vorzugsweise ist bei der Drehmoment-Übertragungs-Verbindung 105 auch keine Haltebremse vorgesehen.

Von der in Figur 1 dargestellten, erfindungsgemäßen, Ausführung des Stellgerätes 1 unterscheidet sich das Stellgerät 101 gemäß der zweiten, nicht erfindungsgemäßen, in der Figur 3 dargestellten Ausführung, im Wesentlichen nur durch die Art des Translations-Rotations-Getriebes sowie durch die Anordnung der Motorachse M windschief zu der Achse B der Drehmomentübertragungsvorrichtung 105. Insofern sind mit Ausnahme dieser konstruktiven Eigenarten die oben beschriebenen Details der ersten bevorzugten Ausführung gemäß der Figur 1 entsprechend auf die in Figur 3 gezeigte zweite bevorzugte Ausführung zu übertragen, wie auch umgekehrt. Insbesondere gilt auch für das Stellgerät 101, dass die Stellung des Abtriebskolbens 111 abhängig ist von dem Verhältnis der Kräfte beziehungsweise Drehmomente, die bereitgestellt werden, einerseits durch den Elektromotor 103, der als bürstenloser Gleichstrommotor realisiert sein kann, und anderseits durch den Druckfederspeicher 7. Mit dem Hubkolben 111 kann beispielsweise ein Stellgerät (nicht näher dargestellt) betätigt werden, welches sich in einem Notzustand vollständig öffnen (oder alternativ: vollständig schließen) soll. Die Rückstellkraft des Federspeichers 107 kann dazu ausgelegt sein, den Rückstellteller 108, der eine Kraftübertragungsverbindung von der Druckfeder 107 beziehungsweise Rückstellfeder auf den unteren Teil des Abtriebskolbens 111 bereitstellt, in der translatorischen Betätigungsrichtung b in einer Rückstellrichtung, die auch als erste Richtung bezeichnet sein kann beziehungsweise gemäß Figur 3 nach oben orientiert sein kann, zu bewegen, bis der Hubkolben 111 in die in Figur 3 dargestellte Stellung einnimmt. Ein mit dem Hubkolben 111 kraft- und/oder formschlüssig verbundenes Ventil könnte entsprechend in eine oberste, vollständig geöffnete (oder vollständig geschlossene) Stellung verbracht werden.

Das Spindelgetriebe 116 der Drehmoments-Übertragungs-Vorrichtung 105 sind nicht - selbsthemmend ausgelegt, sodass eine Rückstellbetätigung des Kolbens 111 in die erste Betätigungsrichtung b (nach oben) durch den auf der Betätigungsachse B liegenden Spindelantrieb 116 zurück in das Planetenradgetriebe 155 und von dem Planetengetriebe 155 über das Spindelgetriebe 115 zurück auf die Motorwelle 153 und an den Motor 103 übertragen wird. Wie bei dem bezüglich der in Figur 1 dargestellten Ausführung beschriebenen Elektromotor 3 entscheidet der Zustand des Elektromotors 103 (Haltezustand, Freilaufzustand, Betätigungszustand oder Bremszustand) über das Bewegungsverhalten des Hubkolbens 111.

Dem Motor 103 entgegen wirkt die Rückstellkraft der Feder 107. Wenn der Motor 103 stromlos geschaltet ist, befindet er sich vorzugsweise in einem Freilaufbetriebszustand, in welchem kein oder nahezu kein Drehmoment von dem Motor 103 auf die Motorwelle 153 wirkt. In diesem Freilaufbetriebszustand des Motors 103 kann die Feder 107 durch das Spindelgetriebe 115, 116 und das Planetenradgetriebe 155 die Motorwelle 153 drehen.

Der Motor 103 kann so ausgestaltet sein, dass er bei einer Drehung der Motorachse 153 durch die Wirkung der Feder 107 als Bremse und/oder Generator wirkt, welche(r) die Not-(Schließ-)Betätigung abbremst, um beispielsweise eine schlagende Ventil-Schließbewegung zu verhindern.

Für einen Betätigungsbefehl zur Bewegung des Kolbens 111 insbesondere in die zweite Betätigungsrichtung b (gemäß Figur 3: nach unten) zum Erreichen einer Soll-Stellung, beispielsweise einer vollständig geschlossenen Stellung oder einer beliebigen, einstellbaren Stellung zwischen einer vollständig geschlossenen Stellung und einer vollständig geöffneten Stellung, kann eine Steuerungselektronik 21 vorgesehen sein, welche dem Elektromotor 103, ansteuert, um eine Bewegung der Antriebswelle 153 zum Betätigen des Abtriebskolbens 111 zu bewirken.

Es kann ein Gleichgewichtzustand zwischen dem Motordrehmoment und der Rückstellkraft der Feder 107 realisiert sein, in dem der Elektromotor 103 zum Erreichen einer bestimmten Haltestellung angesteuert wird, wobei die Haltekraft des Elektromotors insbesondere unter Berücksichtigung der Wirkung des Planetengetriebes 155 und der Spindelgetriebe 115 und 116 eine Hemmung der Drehmomentübertragung 105 entgegen einer Bewegung durch die Rückstellfeder 107 bewirkt.

Der Motor 103 ist vorzugsweise ortsfest an ein Getriebegehäuse 123 befestigt, das einen Gehäuseabschnitt zur Befestigung der Steuerungselektronik 21 trägt. Das Getriebegehäuse 123 ist drehfest mit einem Federgehäuse 125 verbunden. An dem Federgehäuse 125 und/oder dem Getriebegehäuse 123 stützt sich radial ein Kugellager 152 ab, das die Drehmomentübertragungsvorrichtung 105, insbesondere die Spindelhülse mit dem Innengewinde des abtriebsseitigen Spindelgetriebes 116, lagert. In dem Druckfedergehäuse 125 stützt sich in Betätigungsrichtung b die Druckfeder 107 einerseits an einer Innenwand des Gehäuses 125 und andererseits an dem Rückstellteller 108 ab. Der Rückstellteller 108 überträgt die Federkraft an den translationsbeweglichen Kolben 111, insbesondere dessen unteren Abschnitt 111b.

Die Spindelhülse 117 des Spindelgetriebes 116 weist ein nicht-selbsthemmendes Innengewinde auf, das in einem Kontakteingriff mit dem oberen Abschnitt 111a des Hubkolbens 111 steht. Außenseitig ist die Spindelhülse 117 drehfest, vorzugsweise form- und/oder kraftschlüssig, mit einem Abtriebssteg des mehrstufigen, vorzugsweise zweistufigen, Planetenradgetriebes 155 verbunden.

Die erste Planetenradgetriebestufe wird durch Drehung des Hohlrades angetrieben, welches außenseitig eine Zahnradflankierung aufweist, die einen nichtselbsthemmende Spindelgetriebeverbindung 115 mit der Motorwelle 153 realisiert. Zur Drehmomentübertragung von der ersten Planetenradgetriebestufe dient der Steg der Planetenräder der ersten Planetenradgetriebestufe als Sonnenrad für die zweite Planetenradgetriebestufe.

### Bezugszeichenliste

- 1, 101: Stellgerät
- 3, 103: Elektromotor
- 5, 105: Drehmomentübertragungsverbindung
- 7, 107: Feder
- 11, 111: Hubkolben
- 13: Hebel
- 15: Exzenter
- 16: Lagerachse
- 21: Steuerungselektronik
- 23, 25: Halbschalen
- 52, 152: Kugellager
- 53, 153: Motorwelle
- 54: Haltescheibe
- 55, 155: Getriebe
- 57: Abtriebswelle
- 61, 71, 81: Getriebestufe
- 63, 73, 83: Sonnenrad
- 65, 75, 85: Planetenrad
- 67, 77, 87: Hohlrad
- 108: Rückstellteller
- 111a: oberer Teil des Hubkolbens
- 111b: unterer Teil des Hubkolbens
- 115: Antriebsspindel
- 116: Spindelgetriebe
- 117: Spindelhülse
- 123: Getriebegehäuse
- 125: Federgehäuse

- A: Achse
- B: Betätigungsachse
- b: Betätigungsrichtung
- E: Exzenterachse
- M: Motorachse

## Patentansprüche

1. Stellgerät (1) mit Sicherheitsstellfunktion zum Betätigen eines Stellglieds zum Einstellen einer Prozessfluidströmung einer prozesstechnischen Anlage, umfassend
einen Elektromotor zum Bereitstellen eines Drehmoments zum Betätigen des Stellglieds, eine Drehmomentübertragungsverbindung (5) zum Koppeln des Elektromotors mit dem Stellglied zum Übertragen des Drehmoments von dem Elektromotor (3) an das Stellglied, wobei die Drehmomentübertragungsverbindung (5) eine Motorwelle (53), ein Getriebe (55) und eine Abtriebswelle (57) umfasst und frei von einer lösbaren Kupplung ist, und
ein Zwangsstellmittel, das eine Zwangswirkung zum Verbringen des Stellglieds in eine Sicherheitsstellung in die Drehmomentübertragungsverbindung (5) einleitet,
wobei die Drehmomentübertragungsverbindung (5) ein mehrstufiges Planetengetriebe umfasst,
wobei der Elektromotor, die Drehmomentübertragungsverbindung (5), nämlich sowohl die Motorwelle (53), das mehrstufige Planetengetriebe, als auch die Abtriebswelle (57), und das Zwangsstellmittel koaxial zu einander angeordnet sind, wobei ein Exzenter (15) koaxial an der Drehmomentübertragungsverbindung (5), insbesondere der Abtriebswelle (57), zum linearen Betätigen des Stellglieds angeordnet ist, wobei das Planetengetriebe ein Rotations-Translations-Getriebe in Form des Exzenters (15) aufweist, welcher koaxial zu einer Stellantriebsachse (A) rotiert.

2. Stellgerät (1) nach Anspruch 1, wobei der Elektromotor als vorbestimmte Betriebszustände einen Antriebszustand, einen Haltezustand, einen Bremszustand und/oder einen Freilaufzustand aufweist, ferner umfassend eine Motorsteuerungselektronik zum Veranlassen eines der vorbestimmten Betriebszustände des Elektromotors.

3. Stellgerät (1) nach Anspruch 2, wobei die Motorsteuerungselektronik über eine Winkellagesensorik, wie ein magnetempfindlicher Sensor, zum Erfassen einer IST-Winkellage des Elektromotors verfügt und wobei die Motorsteuerungselektronik dazu ausgelegt ist, den Elektromotor unter Berücksichtigung seiner IST-Winkellage zu betätigen.

4. Stellgerät (1) nach einem der vorstehenden Ansprüche, wobei der Elektromotor wenigstens einen Betriebszustand, wie einen Freilaufzustand oder einen Bremszustand, aufweist, in dem das Drehmoment des Elektromotors derart gering ist, dass das Stellglied durch das Zwangsstellmittel bei ununterbrochener Drehmomentübertragungsverbindung (5) in die Sicherheitsstellung verbringbar ist, wobei der Elektromotor in dem Freilaufzustand mit einer niedrigen Spannung bestromt oder unbestromt ist.

5. Stellgerät (1) nach einem der vorstehenden Ansprüche, wobei das Stellgerät einen Haltezustand aufweist, in dem der Elektromotormit wenigstens einer geringen Spannung bestromt ist und das Stellglied entgegen dem Zwangsstellmittel in einer konstanten Stellung hält.

6. Stellgerät (1) nach Anspruch 2 und Anspruch 5, wobei die Motorsteuerungselektronik zum Veranlassen des Haltezustands wenigstens eine Spule und/oder wenigstens ein Paar Spulen des Elektromotors mit einem Haltesteuerstrom betätigt.

7. Stellgerät (1) nach einem der vorstehenden Ansprüche, wobei der Elektromotor in dem Bremszustand einen Drehmoment aufbringt, der die Geschwindigkeit reduziert, mit der das Stellglied durch das Zwangsstellmittel in die Sicherheitsstellung verbracht wird.

8. Stellgerät (1) nach Anspruch 2 und Anspruch 7, wobei die Motorsteuerungselektronik zum Veranlassen des Bremszustands temporär wenigstens eine Spule oder wenigstens zwei Spulen des Elektromotors kurzschließt.

9. Stellgerät (1) nach Anspruch 7 oder 8, wobei der Elektromotor dazu ausgelegt ist, in dem Bremszustand als Generator zu wirken und Energie an eine Speichereinrichtung, wie ein Akkumulator oder eine Kapazität, abzugeben.

10. Stellgerät (1) nach einem der vorstehenden Ansprüche, wobei der Stellantrieb frei von einer Fliehkraftbremse ausgeführt ist.

11. Stellgerät (1) nach einem der vorstehenden Ansprüche, wobei der Exzenter (15) eine Exzenterachse (E) aufweist, an welcher ein Hebel (13) zum translatorischen Betätigen eines Abtriebskolbens (11) zum Stellen des Stellglieds angelenkt ist.

12. Stellantrieb nach einem der vorstehenden Ansprüche, wobei der Elektromotor mit einer Nenndrehzahl von 3.000 U/Min oder mehr, insbesondere mit 10.000 U/min oder mehr, betreibbar ist.

13. Prozesstechnische Anlage, beispielsweise chemische Anlage, wie petrochemische Anlage, lebensmittelverarbeitende Anlage, insbesondere Brauerei, Kraftwerk, wie Nuklearkraftwerk, umfassend ein Stellgerät (1) nach einem der vorstehenden Ansprüche.

## Claims

1. Actuation device (1) having a fail-safe function for actuating an actuator for adjusting a process fluid flow of a process plant, comprising
- an electric motor for providing a torque for actuating the actuator,
- a torque transfer connection (5) for coupling the electric motor to the actuator for transferring the torque form the electric motor (3) to the actuator, wherein the torque transfer connection (5) comprises a motor shaft (53), a gear (55) and an output shaft (57) and is free of a detachable coupling, and
- a forced actuation means triggering a forced effect for bringing the actuator in a fail-safe position in the torque transfer connection (5),
wherein the torque transfer connection (5) comprises a multistage planetary gear,
wherein the electric motor, the torque transfer connection (5), namely the motor shaft (53), the multistage planetary gear as well as the output shaft (57), and the forced actuation means are arranged coaxially to each other, wherein an eccentric (15) is arranged coaxially on the torque transmission connection (5), in particular the output shaft (57), for linear actuation of the actuator, wherein the planetary gear comprises a rotation-translation gear in the form of the eccentric (15) which rotates coaxially with an actuator drive axis (A).

2. Actuation device (1) according to claim 1, wherein the electric motor comprises a drive state, a hold state, a break state and/or a free run state as predefined operational states, further comprising a motor control electronics for inducing a predefined operational state of the electric motor.

3. Actuation device (1) according to claim 2, wherein the motor control electronics has an angle position sensor technology, such as a magnet sensitive sensor, for capturing a present angle position of the electric motor and wherein the motor control electronics is designed to actuate the electric motor taking account of its present angle position.

4. Actuation device (1) according to one of the preceding claims, wherein the electric motor comprises at least one operational state, such as a free run state or a break state, in which the torque of the electric motor is so small that the actuator can be brought into the fail-safe position by the forced actuation means while having an uninterrupted torque transfer connection (5), wherein in the free run state the electric motor is powered with a small voltage or is unpowered.

5. Actuation device (1) according to one of the preceding claims, wherein the actuation device comprises a hold state, in which the electric motor is powered with at least a small power and holds the actuator in a constant position against the forced actuation means.

6. Actuation device (1) according to claim 2 and claim 5, wherein the motor control electronics actuates at least one spool and/or at least one pair of spools of the electric motor with a hold control current for inducing the hold state.

7. Actuation device (1) according to one of the preceding claims, wherein the electric motor provides a torque in the break state, which reduces the velocity with which the actuator is brought into the fail-safe position by the forced actuation means.

8. Actuation device (i) according to claim 2 and claim 7, wherein the motor control electronics temporarily shortens at least one spool or at least two spools of the electric motor for inducing the break state.

9. Actuation device (1) according to claim 7 or 8, wherein the electric motor is designed to act as generator in the break state and to deliver energy to a storage unit, such as an accumulator or a capacity.

10. Actuation device (1) according to one of the preceding claims, wherein the actuating drive is free of a centrifugal break.

11. Actuation device (1) according to one of the preceding claims, wherein the eccentric (15) comprises an eccentric axis (E) to which a lever (13) is hinged for translationally actuating an output piston (11) for actuating the actuator.

12. Actuating drive according to one of the preceding claims, wherein the electric motor is operable with a nominal speed of 3,000 rpm or more, in particular with 10,000 rpm or more.

13. Process plant, for example chemical plant, such as petrochemical plant, food processing plant, in particular brewery, power plant, such as nuclear power plant, comprising an actuation device (1) according to one of the preceding claims.

## Revendications

1. Dispositif de réglage (1) doté d'une fonction de réglage de sécurité pour l'actionnement d'un organe de réglage destiné à régler un flux de fluide de processus d'une installation technique, comportant
un moteur électrique pour la mise à disposition d'un couple de rotation permettant d'actionner l'organe de réglage, une liaison de transmission de couple de rotation (5) pour le couplage du moteur électrique avec l'organe de réglage permettant la transmission du couple de rotation du moteur électrique (3) à l'organe de réglage, dans lequel la liaison de transmission de couple de rotation (5) comporte un arbre de moteur (53), un engrenage (55) et un arbre de sortie (57) et est exempte d'accouplement détachable, et
un moyen de réglage forcé produisant un effet de contrainte pour le passage de l'organe de réglage dans une position de sécurité dans la liaison de transmission de couple de rotation (5),
dans lequel la liaison de transmission de couple de rotation (5) comporte un engrenage planétaire à plusieurs étages,
dans lequel le moteur électrique, la liaison de transmission de couple de rotation (5), notamment aussi bien l'arbre de moteur (53), l'engrenage planétaire à plusieurs étages, que l'arbre de sortie (57) et le moyen de réglage forcé sont disposés coaxialement les uns par rapport aux autres, dans lequel un excentrique (15) est disposé coaxialement sur la liaison de transmission de couple de rotation (5), en particulier sur l'arbre de sortie (57), pour l'actionnement linéaire de l'organe de réglage, dans lequel l'engrenage planétaire présente un engrenage de translation de rotation sous la forme de l'excentrique (15), lequel tourne coaxialement à un axe d'entraînement de réglage (A).

2. Dispositif de réglage (1) selon la revendication 1, dans lequel le moteur électrique présente un état d'entraînement, un état de maintien et un état de freinage et/ou un état de course libre, en tant qu'états de fonctionnement prédéterminés, comportant en outre une électronique de commande de moteur destinée à induire l'un des états de fonctionnement prédéterminés du moteur électrique.

3. Dispositif de réglage (1) selon la revendication 2, dans lequel l'électronique de commande de moteur dispose d'un détecteur de position angulaire, tel qu'un capteur magnéto-sensible, et dans lequel l'électronique de commande de moteur est configurée pour actionner le moteur électrique en tenant compte de sa position angulaire effective.

4. Dispositif de réglage (1) selon l'une des revendications précédentes, dans lequel le moteur électrique présente au moins un état de fonctionnement, tel qu'un état de course libre ou un état de freinage, dans lequel le couple de rotation du moteur électrique est réduit de telle façon que l'organe de réglage peut être mis dans la position de sécurité en présence d'une liaison de transmission de couple de rotation (5) ininterrompue, dans lequel le moteur électrique est alimenté ou non alimenté en basse tension.

5. Dispositif de réglage (1) selon l'une des revendications précédentes, dans lequel le dispositif de réglage présente un état de maintien, dans lequel le moteur électrique est alimenté au moins en faible tension et maintient l'organe de réglage dans une position constante à l'encontre du moyen de réglage forcé.

6. Dispositif de réglage (1) selon la revendication 2 et la revendication 5, dans lequel l'électronique de commande de moteur actionne au moins une bobine et/ou au moins une paire de bobines du moteur électrique avec un courant de commande de maintien, pour induire l'état de maintien.

7. Dispositif de réglage (1) selon l'une des revendications précédentes, dans lequel, dans l'état de freinage, le moteur électrique applique un couple de rotation réduisant la vitesse avec laquelle l'organe de réglage est mis dans la position de sécurité par le moyen de réglage forcé.

8. Dispositif de réglage (1) selon la revendication 2 et la revendication 7, dans lequel, pour induire l'état de freinage, l'électronique de commande de moteur court-circuite temporairement au moins une bobine ou au moins deux bobines du moteur électrique.

9. Dispositif de réglage (1) selon la revendication 7 ou 8, dans lequel le moteur électrique est configuré pour agir en tant que générateur dans l'état de freinage et pour fournir de l'énergie à un dispositif de stockage, tel qu'un accumulateur ou une capacité.

10. Dispositif de réglage (1) selon l'une des revendications précédentes, dans lequel l'entraînement de réglage est conçu sans frein centrifuge.

11. Dispositif de réglage (1) selon l'une des revendications précédentes, dans lequel l'excentrique (15) présente un axe d'excentrique (E), sur lequel est articulé un levier (13) pour l'actionnement en translation d'un piston de sortie (11) permettant le réglage de l'organe de réglage.

12. Entraînement de réglage selon l'une des revendications précédentes, dans lequel le moteur électrique peut fonctionner avec une vitesse de rotation nominale de 3.000 U/min, en particulier de 10.000 U/min ou plus.

13. Installation technique, par exemple une installation chimique, telle qu'une installation pétrochimique, une installation de transformation de produits alimentaires, en particulier une brasserie, une centrale, telle qu'une centrale nucléaire, comportant un dispositif de réglage (1) selon l'une des revendications précédentes.
